# EUROPEAN PATENT SPECIFICATION

(11) **EP 2 487 088 B1**
(45) Date of publication and mention of the grant of the patent: **27.11.2013**
(21) Application number: 11154083.7
(22) Date of filing: 10.02.2011
(51) Int. Cl.: B62D 1/184, B62D 1/183

(54) **Steering column adjustment mechanism**
Lenksäuleneinstellmechanismus
Mécanisme de réglage de colonne de direction

(43) Date of publication of application: 15.08.2012
(73) Proprietor: Autoliv Development AB, 447 83 Vårgårda (SE)
(72) Inventor: Hallenbert, Lennart, 447 93 Vagarda (SE); Rydsmo, Erik, 466 95 Sollebrunn (SE)
(74) Representative: Beattie, Alex Thomas Stewart

(56) References cited:
- WO-A1-91/06461
- DE-A1-102007 023 080

## Description

This invention relates to a steering column adjustment mechanism, and in particular concerns an arrangement for allowing the angle of tilt of a steering wheel with respect to a vehicle's dashboard to be altered.

It is common in modern vehicles for the angle of tilt of the steering wheel with respect to the vehicle's dashboard to be adjustable. This allows drivers to adjust the position of steering wheel in accordance with their height and/or preferred driving position.

DE102007023080 discloses an arrangement for setting or adjustment of the steering wheel position in a commercial vehicle. The arrangement comprises a bearing block in which an upper steering column housing for a steering column is adjustably mounted. The bearing block has first guide and fastening means for attachment to the steering column housing, allowing the height (H) to be adjusted, and second guide and fastening means to allow the angle of inclination to be adjusted. The second guide and fastening means comprises a lever arm, which is adjustably mounted at a lower end of the bearing block, and at an upper end has a toothed recess into which a toothed element is connected to the steering column housing, directly or via a lever. By this construction, a low-cost and fast-to-use easy-entry function is provided, in combination with a secure memory function for the steering column adjustment. It is possible for the steering column to be restored to the original ride height without interfering with the driver's side base of the steering column adjustment for height and tilt. No electromotive setting aids are needed for this memory function.

In particular DE102007023080 discloses a steering column arrangement comprising a housing, an adjustment element to which a steering wheel column may be connected so that the steering wheel pivots with the adjustment element, the adjustment element having a first end and a second end and being pivotably connected to the housing at or near the first end; and first and second grip elements between which the second end of the adjustment element is received, the first and second grip elements defining a travel path therebetween along which the second end of the adjustment element may travel whilst remaining substantially between the grip elements, and a clamping mechanism which selectively applies a clamping force to the grip elements so that, when the clamping arrangement is activated, the first and second grip elements are clamped together.

WO91/06461 discloses an adjustable steering wheel, particularly for trucks. The steering column is on an upper supporting arm, which is pivoted in a lower supporting arm, which in turn is pivotally mounted to a windshield beam, for example, in the cab. The locking device in the form of a first and a second friction plate package with an intermediate conical spring washer package locks the supporting arms relative to each other and relative to the cab. By means of a pair of levers, a control cable and a foot pedal, the spring package can be compressed to remove the locking effect of the plate packages.

It is an object of the present invention to provide an adjustment mechanism of this nature which is simple and cost-effective, which allows the angle of tilt of the steering wheel with respect to the dashboard to be adjusted through the application of only relatively low force, and which occupies only a relatively small amount of space.

Accordingly, one aspect of the invention provides a steering column adjustment arrangement comprising: a housing; an adjustment element to which a steering wheel column may be connected so that the steering wheel column pivots with the adjustment element, the adjustment element having a first end and a second end, the adjustment element being elongate and tapering to an apex at the second end, being narrower than the housing and located within the housing and being pivotably connected to the housing at or near the first end; and first and second grip elements between which the second end of the adjustment element is received, the first and second grip elements defining a travel path therebetween along which the apex of the adjustment element may travel whilst remaining substantially between the grip elements; and a clamping mechanism which selectively applies a clamping force to the grip elements so that, when the clamping arrangement is activated, the first and second grip elements are clamped together. Advantageously, the arrangement further comprises a socket assembly to which a steering wheel column may be attached.

Preferably, the socket assembly may be selectively decoupled from the adjustment element, so that the socket assembly may be pivoted with respect to the housing independently of the adjustment element.

Conveniently, a catch mechanism is provided to allow the selective decoupling of the socket assembly from the adjustment element.

Advantageously, a biasing mechanism is provided to bias the catch mechanism into the locked position, so that the socket assembly and the adjustment element are rotationally connected to one another.

Preferably, the adjustment element may pivot with respect to the housing to allow the second end of the adjustment element to travel along the travel path

Conveniently, the adjustment element comes into contact with the housing, or an element connected to the housing, at the limit of one or both ends of the travel path.

Advantageously, a plurality of adjustment elements is provided.

Preferably, each of the adjustment elements is disposed between respective first and second grip elements, with no others of the adjustment elements being positioned between the same two grip elements.

Conveniently, the adjustment element and at least one of the grip elements have an area of overlap, and wherein the clamping mechanism selectively applies a clamping force to the area of overlap between the adjustment element and the grip element.

Advantageously, a part of the clamping mechanism, or a part of the housing, comprises one of the grip elements.

Preferably, the arrangement comprises at least one friction element, attached to the housing, which comprises one of the grip elements.

Conveniently, a pair of friction elements is provided, with the adjustment element being disposed between the friction elements.

Advantageously, a plurality of adjustment elements and a plurality of friction elements are provided, with the adjustment elements and friction elements being interleaved with each other.

Preferably, the housing has two sides, with at least one adjustment element being provided at each side of the housing, and wherein the clamping mechanism comprises a pair of clamping elements which apply separate clamping forces at each side of the housing.

Conveniently, the arrangement further comprises a locking mechanism that, when released, releases the clamping mechanism and also allows the effective length of the steering column to be adjusted.

A further aspect of the invention provides a vehicle incorporating a mechanism according to the above.

In order that the present invention may be more readily understood embodiments thereof will now be described, by way of example, with reference to the accompanying drawings, in which:
Figure 1 is an exploded view of components of a mechanism embodying the present invention;
Figures 2 and 3 show cutaway views of the mechanism of figure 1 with biasing members thereof in different positions;
Figures 4 and 5 show further cutaway views of the mechanism of figure 1, with pivot plates thereof in different positions;
Figures 6 to 8 show the operation of a catch mechanism suitable for use with the present invention; and
Figures 9 to 11 show details of an alternative mechanism.

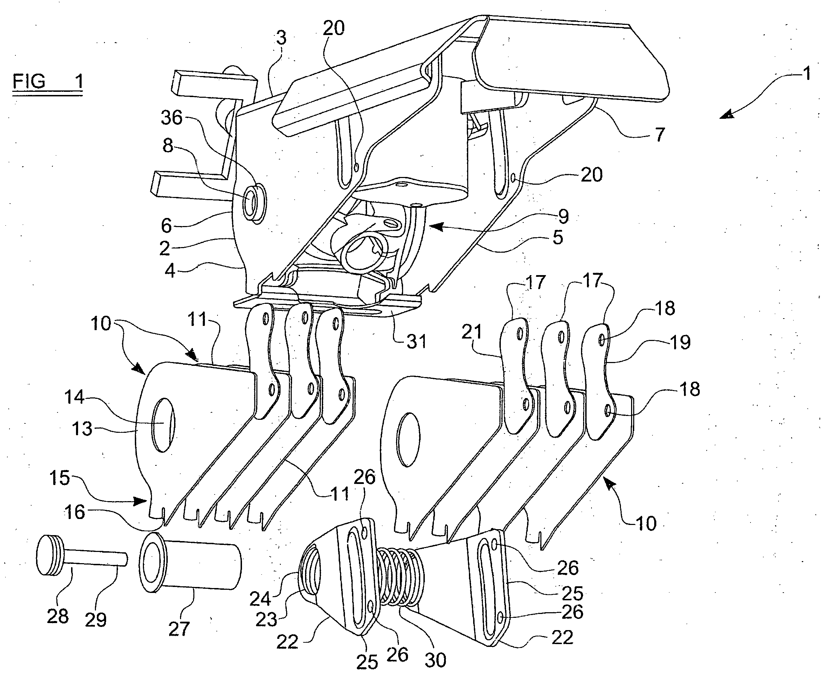

Referring firstly to figure 1, components of a first embodiment of a steering column arrangement 1 are shown. For clarity the components are shown in an exploded view.

A main housing 2 has a generally rectangular top plate 3, and respective left and right side plates 4, 5 which extend away from opposing longer edges of the top plate 3, generally at right angles to the plane of the top plate 3. The side plates 4,5 are generally triangular in form, being wider towards front edges 6 thereof and narrower towards rear edges 7 thereof.

The main housing 2 is a robust component and is preferably formed from a sturdy material such as steel.

Main pivot apertures 8 are formed through the side plates 4,5. The main pivot apertures 8 are arranged towards the front edges 6 of the side plates 4,5, and are aligned with one another.

Within the housing 2 a socket arrangement 9 is rotatably mounted with respect to the main pivot apertures 8, so that the socket arrangement 9 rotates about an axle 36 passing through the main pivot apertures 8. The socket assembly 9 will be described in greater detail below.

A plurality of adjustment elements in the form of pivot plates 10 is located within the main housing 2. Each of the pivot plates 10 is generally triangular, having two long edges 11 which meet one another at a second end of the pivot plate 10, at an acute angle, at an apex 12, which is preferably truncated. A curved rear edge 13 connects the opposite ends of the main edges 11. A support aperture 14 passes through the pivot plate 10 near the rear edge 13 at a first end thereof, with the centre of curvature of the support aperture 14 being approximately aligned with the centre of curvature of the rear edge 13. The axle 36 on which the socket assembly 9 is rotatably mounted also passes through the support apertures 14 of the pivot plates 10 when the arrangement is assembled.

Where one of the main edges 11 of each pivot plate 10 meets the rear edge 13 thereof, a locking projection 15 is formed, which has a locking slot 16 formed therein.

In the depicted embodiment eight pivot plates 10 are shown. Four of the pivot plates 10 are provided, aligned with one another and stacked together, against the inner side of one of the side plates 4, between the side plate 4 and the socket assembly 9. The remaining four pivot plates 10 are provided against the inner surface of the other side plate 5 of the main housing 2, between the side plate 5 and the socket assembly 9.

Each of the pivot plates 10 is arranged so that the rear edge 13 thereof lies near the front edge 6 of the housing 2, with the elongate, tapering part of the pivot plate 10 extending within the housing 2 towards the narrower rear end 7 thereof. The pivot plates 10 are each narrower than the housing 2, and may therefore pivot through a limited range of movement with respect to the housing 2.

A plurality of friction plates 17 is also provided. In the depicted embodiment, six friction plates 17 are provided, with three of the friction plates 17 being arranged on each side of the housing 2.

Each of the friction plates 17 is generally rectangular, having a pair of attachment holes 18 formed through a rear edge 19 thereof.

Corresponding attachment holes 20 are formed through the side plates 4,5 of the housing 2, towards the rear edge 7 thereof.

On each side of the housing 2, three of the friction plates 17 are stacked together, in alignment with one another, and attached to the interior surface of the appropriate side plate 4,5 by corresponding attachment means such as rivets. The length of the pivot plates 10 is such that the apices 12 of the pivot plates 10 overlap the front edges 21 of the friction plates 17.

A pair of biasing members 22 is provided within the housing 2. Each biasing member 22 has a support aperture 23 formed through a first end 24 thereof, while a second end 25 is wider than the first end 24, and splayed outwardly with respect thereto. The second end 25 has a pair of attachment holes 26 formed therethrough, and is attached to the inner side of a respective one of the side plates 4,5 by the same rivets that hold the friction plates 17 in place. A cylinder 27 is attached to the support aperture 23 of one of the biasing plates 22. A piston 28 is slidably received within the cylinder 27, and a protruding end 29 of the piston is attached to the support aperture 23 of the other one of the biasing plates 22.

A spring 30 is also provided between the biasing plates 22, surrounding the cylinder 27. The spring 30 tends to bias the first ends 24 of the biasing plates 22 away from one another.

A catch member 31 is attached to the socket assembly 9, and may be moved from a first position, in which the catch member 31 is locked in place with respect to the pivot plates 10, and a second position, in which the catch member 31 is free to move with respect to the pivot plates 10. The catch member 31 will be described in greater detail below.

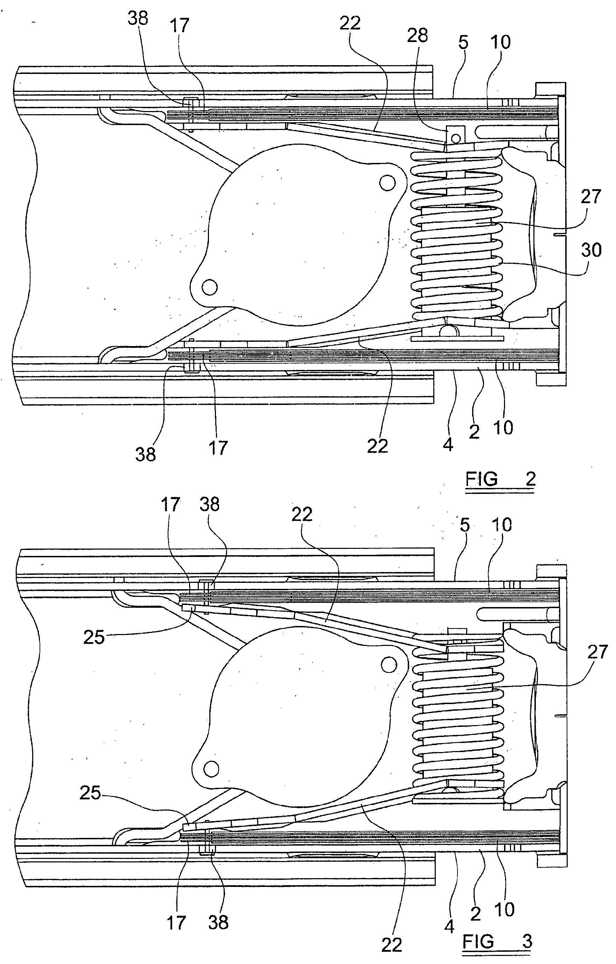

Figure 2 shows selected components within the housing 2 once the arrangement 1 is assembled. In this figure it can be seen that the pivot plates 10 are closely stacked together inside the respective side plates 4,5 of the housing 2. The apices 12 of the pivot plates 10 are interleaved with the friction plates 17, which are secured to the side plates 4,5 with rivets 38.

The biasing members 22 overlie the region, on each side of the housing 2, where the pivot plates 10 and friction plates 17 overlap one another. Hence, most of the pivot plates 10 lie between adjacent ones of the friction plates 17, but exceptions to this are the outermost pivot plate 10 on each side (i.e. the one that lies closest to the appropriate side plate 4,5), which lies between the side plate 4,5 and one of the friction plates 17, and the innermost pivot plate 10 on each side, which lies between one of the friction plates 17 and one of the biasing members 22.

In the arrangement shown in figure 2, the piston 28 is in an extended position with respect to the cylinder 27. In this configuration the biasing members 22 press against the regions of overlap between the pivot plates 10 and the friction plates 17. It will therefore be understood that very large frictional forces between the pivot plates 10 and the friction plates 17 would need to be overcome for the pivot plates 10 to slide relative to the friction plates 17, and hence for the pivot plates 10 to pivot around the axle 36.

Figure 3 shows the situation when the piston 28 is withdrawn into the cylinder 27, thus compressing the spring 29 and bringing the first ends 24 of the biasing members 22 closer together. The second ends 25 of the biasing members 22 are held in place with respect to the side plates 4,5 of the housing 2 by the rivets 38. However, the biasing members 22 are lifted away from the region where the pivot plates 10 overlap the friction plates 17. This greatly reduces the frictional forces that must be overcome for the pivot plates 10 to move with respect to the friction plates 17, and hence for the pivot plates 10 to pivot around the axle 36.

The withdrawing of the piston 28 into the cylinder 27 may be achieved by any suitable means, for instance by a manual or pneumatic actuator (not shown). When the actuator is released, the spring 29 returns the piston 28, cylinder 27 and biasing members 22 to the configuration shown in figure 2.

In use, a steering wheel column (not shown) will be attached to the socket assembly 9, and the steering wheel of the vehicle will be attached to the steering wheel column. Rotational motion of the steering wheel will be transmitted by the steering wheel column to other components of the steering column, which may comprise a series of interlinked rotatable elements, as is known in the art

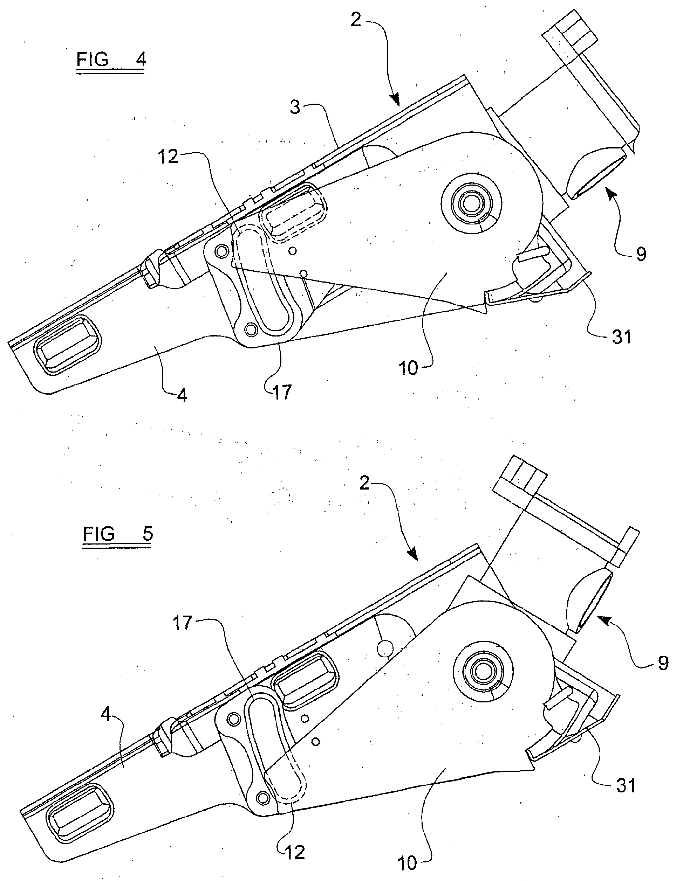

Figures 4 and 5 show side-views of the housing 2.

In figure 4, the pivot plates 10 have been rotated so that their apices 12 are at the upward limit of their range of movement, and lie against the inner edge of the top plate 3 of the housing 2.

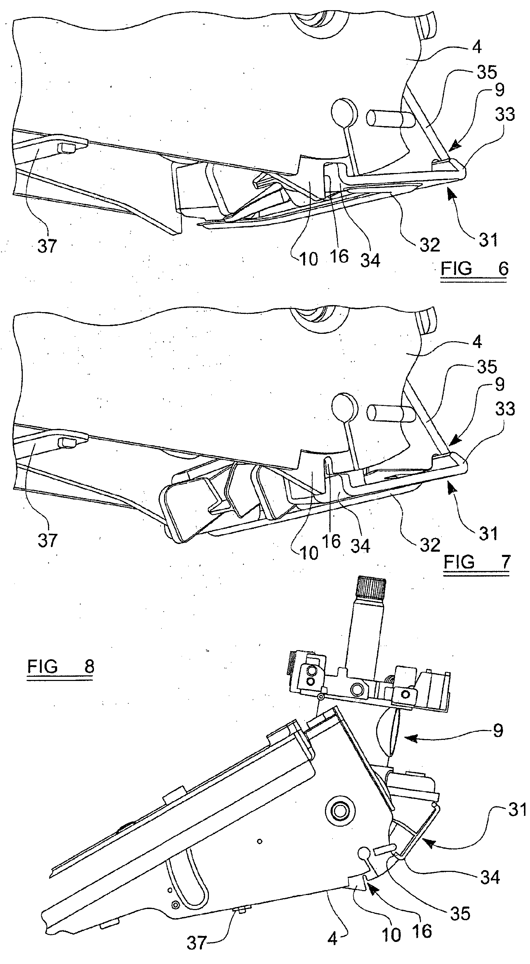

In figure 5, the pivot plates 10 have been rotated so that the apices 12 thereof are at the lowermost limit of their range of motion, lie against a blocking member 37 (not shown in figures 4 and 5, but visible in figures 6 - 8) that passes between the lower edges of the side plates 4,5.

As described above the catch member 31, when engaged, constrains the socket assembly 9 to rotate with the pivot plates 10. In figure 4, the main axis of the socket assembly 9 is at a relatively shallow angle (52° to vertical), and in figure 5 the main axis of the socket assembly 9 is at a relatively steep angle (32° to vertical).

It will be appreciated that, when the biasing members 22 are pressed against the region of overlap of the pivot plates 10 and the friction plates 17, it will be extremely difficult to move the steering wheel column (attached to the socket assembly 9) from one angular orientation to another.

However, when the piston 28 is withdrawn into the cylinder 27, thus lifting the biasing members 22 away from the region of overlap between the pivot plates 10 and the friction plates 17, the level of force required to move the steering wheel column from one angular orientation to another is greatly reduced, and a user may relatively easily adjust the angle of the steering wheel column.

It will be appreciated that, when a user attempts to move the steering wheel column, the user is likely to have a mechanical advantage, as the distance from the steering wheel to the axle 36 will be greater than the distance from the axle 36 to the region of overlap between the pivot plates 10 and the friction plates 17 (both the steering wheel and the pivot plates 10 pivoting around the axle 36). The user will therefore be able to operate a relatively long lever when adjusting the angle of the steering wheel column.

It will be appreciated that this design allows for space to be used efficiently. If the apex 12 of each of the pivot plates 10 was formed with a curved guide slot which moved with respect to a fixed pin as the pivot plate 10 rotates, the apices 12 of the pivot plates 10 would need to be relatively wide. The selective clamping of the apices 12 of the pivot plates 10 as described above allows the pivot plates 10 (and, therefore, the housing 2) to be relatively narrow and thus to occupy only a minimal amount of space.

It will be appreciated that the numbers of pivot plates 10 and friction plates 17, and the materials from which these components (or at least the parts of these components which overlap) can be selected to control the level of force that must be applied to the steering wheel column to change the angle of the steering wheel column, when the biasing members 22 are engaged and disengaged, respectively.

Preferred aspects of the invention also comprise an "easy entry" facility, which allows the steering wheel column to be lifted up to a relatively steep angle, to allow a driver to enter or leave the vehicle easily. This may be necessary if the space between the driver's seat and the steering wheel is relatively small (this may be the case, for example, in industrial/agricultural vehicles or in sports cars), or if the driver of the vehicle is disabled, overweight or otherwise large.

Referring to figures 6 and 7, the catch member 31 is shown in more detail. The catch member 31 includes a main plate 32 which is pivotally connected to a lower edge of the socket assembly 9. A handle 33 is provided at a first end of the main plate 32, which faces towards an operator of the vehicle in use. A curved flange 34 is provided at a second main plate 32. In the configuration shown in figure 6, in which the catch member 31 is engaged, the flange 34 protrudes upwardly into the locking slot 16 of each of the pivot plates 10. A spring biasing system (not shown) biases the catch member 31 into the engaged position shown in figure 6.

To disengage the catch member 31, a user may grasp the handle 33 and pivot the catch member 31, so that the flange 34 is lifted out of the locking slot 16, as shown in figure 7. The catch member 31 is then disengaged.

Once the catch member 31 is disengaged, the socket assembly 9 may be rotated freely with respect to the housing 2, and pivot plates 10, so that the steering wheel column is rotated upwardly to a steep angle, as shown in figure 8.

In preferred embodiments, the housing 2 comprises a shoulder 35 which is generally aligned with the flange 34 when the steering wheel column has been adjusted upwardly to a steep angle. Once the flange 34 has passed the shoulder 35, the spring biasing mechanism draws the flange 34 inwardly, so that the back edge of the flange 34 rests against the shoulder 35, thus maintaining the steering wheel column in its elevated position. This situation is shown in figure 8.

Once the driver has safely entered or exited the vehicle, the handle 33 may once again be manipulated to pivot the main plate 32 of the catch member 31, thus removing the flange 34 from the shoulder 35 and allowing the steering wheel column to rotate back until the flange 34 is aligned with the locking slot 16, at which point the spring biasing mechanism will draw the flange 34 into the locking slot 16. The catch member 31 is therefore once again activated, and the socket assembly 9 is constrained to rotate with the pivot plates 10.

It will be understood that, if the easy entry feature is used to rotate the steering wheel column upwardly, when the steering wheel column is returned to its operating position it will lock into the same orientation as before the easy entry feature was used, as the socket assembly 9 will once again be locked in position with respect to the pivot plates 10, which will not have moved during use of the easy entry feature.

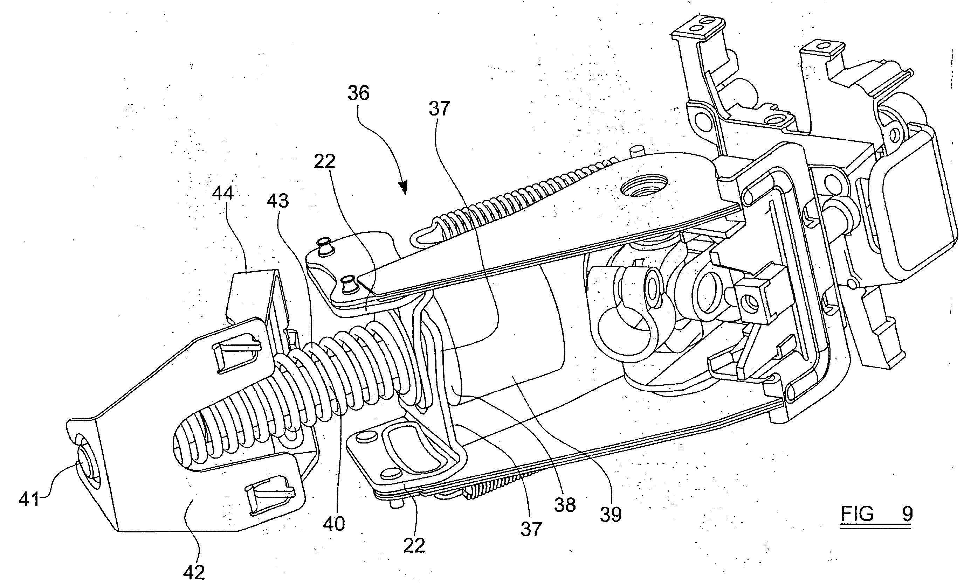

Referring to figure 9, components are shown of an alternative mechanism allowing the angle of tilt of the steering wheel to be adjusted, and also the distance of the steering wheel from the driver to be altered. Many of the components of the alternative mechanism 36 are similar to those of the other embodiments described above.

The biasing members 22 each have an attachment plate 37 which extends substantially inwardly and is attached to a bottom side 38 of a cylinder 39. A piston 40 protrudes from the cylinder, extending within the housing (not shown in figure 9) generally away from the steering wheel end thereof. At its distal end 41, the piston is attached to a retaining plate 42, which "floats" within the housing and is not rigidly fixed in place.

A coil spring 43 is positioned around the piston 40, extending between the attachment plates 37 of the biasing members 22 and the retaining plate 42. In the embodiments shown in figure 9, the mechanism 36 is in its default configuration, in which the coil spring 43 is under tension and presses outwardly against the attachment plate 37 of the biasing members 22 and the retaining plate 42. Pivotably attached to the retaining plate 42 is a length adjustment locking member 44, which will be explained in greater detail below.

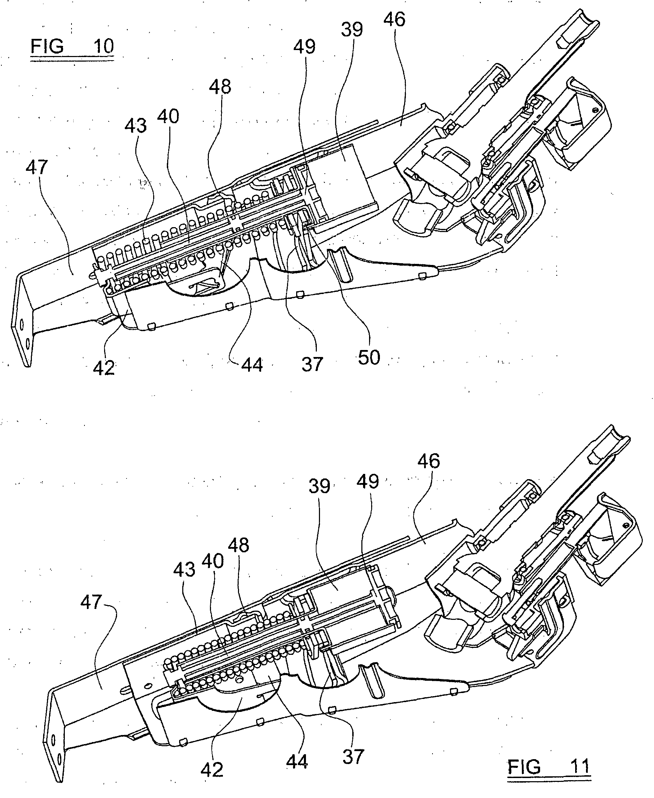

Turning to figures 10 and 11, the mechanism 36 is shown in use. It will be seen that the housing comprises an inner housing member 46 (corresponding to the housing 2 discussed above), and an outer housing member 47 which is connected (directly or indirectly) to the vehicle chassis and which may slide with respect to the inner housing element. By sliding these two components with respect to one another the effective length of the steering column may be varied, so the steering wheel can be positioned closer to, or further away from, the driver.

In figure 10 the mechanism 36 is shown in its default configuration. The biasing members 22 are positioned so that they press against the apices 12 of the pivot plates 10 to prevent the angle of tilt of the steering wheel from being adjusted, as discussed above.

The length adjustment locking member 44 includes, at a distance from the point at which it attaches to the retaining plate 42, a locking plate 48 which is received in a space between the inner and outer housing members 46,47. In the default configuration shown in figure 10, the locking plate 48 is disposed at an angle with respect to the walls of the inner and outer housing elements 46,47, and presses against both of these components, preventing the components from sliding with respect to one another. The length of the steering column is, therefore, not adjustable.

The cylinder 39 is hollow, and the piston 40 carries a piston head 49 which lies within the cylinder 39 and may travel within the cylinder 39. In the default configuration shown in figure 10 the piston head 49 is disposed at a bottom end of the cylinder 39, i.e. the end facing generally away from the steering wheel. A gas inlet 50 is provided to introduce gas into the bottom end of the cylinder 39.

In order to allow both the angle of tilt and the effective length of the steering column to be adjusted, gas may be introduced into the cylinder 39 through the gas inlet 50, which drives the piston head 49 towards the upper end of the cylinder 39, as shown in figure 11. The effect of this is to draw the distal end of the piston 40 and the cylinder 39 closer to one another.

One effect of this is that the retaining plate 42 moves towards the cylinder 39, causing the length adjustment locking member 44 to pivot so that the locking plate 48 thereof is generally aligned with the walls of the inner and outer locking members 46,47 and no longer presses strongly against these walls. It will therefore be understood that the inner and outer housing members 46,47 may slide with respect to one another to allow the effective length of the steering column to be adjusted.

In addition, the locking plates 37 of the biasing members 22 will be pushed by the cylinder 39 away from the steering wheel, thus lifting the biasing members 22 away from the pivot plates 10. As discussed above, this allows the angle of tilt of the steering wheel column to be adjusted.

In order to return the mechanism into the configuration shown in figure 10, it is simply necessary to stop introducing pressurised gas into the gas inlet 50. The spring 43 will then return the piston 40 to its original position, i.e. that shown in figure 10.

It will be understood that this embodiment provides a combined locking mechanism that, when released, allows both the effective length of the steering column and the angle of tilt of the steering wheel to be adjusted. It will be appreciated that other mechanism may be provided to fulfil this task, and in particular that the use of a pneumatic/hydraulic cylinder is not essential.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A steering column adjustment arrangement (1) comprising:
a housing (2);
an adjustment element (10) to which a steering wheel column may be connected so that the steering wheel column pivots with the adjustment element (10), the adjustment element (10) having a first end and a second end (12), the adjustment element (10) being elongate and tapering to an apex (12) at the second end (12), being narrower than the housing and located within the housing (2) and being pivotably connected to the housing (2) at or near the first end; and
first and second grip elements (4,5,17,22) between which the second end (12) of the adjustment element (10) is received, the first and second grip elements (4,5,17,22) defining a travel path therebetween along which the apex (12) of the adjustment element (10) may travel whilst remaining substantially between the grip elements (4,5,17,22); and
a clamping mechanism (27,28,22) which selectively applies a clamping force to the grip elements (4,5,17,22) so that, when the clamping arrangement (27,28,22) is activated, the first and second grip elements (4,5,17,22) are clamped together.

2. An arrangement (1) according to claim 1, further comprising a socket assembly (9) to which a steering wheel column may be attached.

3. An arrangement (1) according to claim 2, wherein the socket assembly (9) may be selectively decoupled from the adjustment element (10), so that the socket assembly (9) may be pivoted with respect to the housing (2) independently of the adjustment element (10).

4. An arrangement (1) according to claim 3, wherein a catch mechanism (31) is provided to allow the selective decoupling of the socket assembly (9) from the adjustment element (10).

5. An arrangement (1) according to claim 4, wherein a biasing mechanism is provided to bias the catch mechanism (31) into the locked position, so that the socket assembly (9) and the adjustment element (10) are rotationally connected to one another.

6. An arrangement (1) according to any preceding claim, wherein the adjustment element (10) may pivot with respect to the housing (2) to allow the second end (12) of the adjustment element (10) to travel along the travel path.

7. An arrangement (1) according to claim 6, wherein the adjustment element comes into contact with the housing (2), or an element (37) connected to the housing (2), at the limit of one or both ends of the travel path.

8. An arrangement (1) according to any preceding claim, wherein a plurality of adjustment elements (10) is provided.

9. An arrangement (1) according to claim 8, wherein each of the adjustment elements (10) is disposed between respective first and second grip elements (4,5,17,22), with no others of the adjustment elements (10) being positioned between the same two grip elements (4,5,17,22).

10. An arrangement (1) according to claim 9, wherein the adjustment element (10) and at least one of the grip elements (4,5,17,22) have an area of overlap, and wherein the clamping mechanism (27,28,22) selectively applies a clamping force to the area of overlap between the adjustment element (10) and the grip element (4,5,17,22).

11. An arrangement (1) according to claim 9 or 10, wherein a part of the clamping mechanism (22), or a part of the housing (2), comprises one of the grip elements.

12. An arrangement (1) according to any one of claims 9 to 11, comprising at least one friction element (17), attached to the housing (2), which comprises one of the grip elements.

13. An arrangement (1) according to claim 12, wherein a pair of friction elements (17) is provided, with the adjustment element (10) being disposed between the friction elements (17).

14. An arrangement (1) according to claim 13, wherein a plurality of adjustment elements (10) and a plurality of friction elements (17) are provided, with the adjustment elements (10) and friction elements (17) being interleaved with each other.

15. An arrangement (1) according to any preceding claim, further comprising a locking mechanism (39,40,37,48) that, when released, releases the clamping mechanism (27,28,22) and also allows the effective length of the steering column to be adjusted.

## Patentansprüche

1. Lenksäuleneinstellanordnung (1), umfassend:
ein Gehäuse (2);
ein Einstellelement (10), mit dem eine Lenkradsäule verbunden werden kann, sodass sich die Lenkradsäule mit dem Einstellelement (10) dreht, wobei das Einstellelement (10) ein erstes Ende und ein zweites Ende (12) aufweist, wobei das Einstellelement (10) länglich ist und sich zu einer Spitze (12) an dem zweiten Ende (12) hin verjüngt, schmaler als das Gehäuse ist und sich in dem Gehäuse (2) befindet und schwenkbar mit dem Gehäuse (2) an oder nahe dem ersten Ende verbunden ist; und
ein erstes und zweites Greifelement (4, 5, 17, 22), zwischen denen das zweite Ende (12) des Einstellelements (10) aufgenommen ist, wobei das erste und zweite Greifelement (4, 5, 17, 22) einen Verstellweg dazwischen definieren, entlang dem sich die Spitze (12) des Einstellelements (10) bewegen kann, während sie im Wesentlichen zwischen den Greifelementen (4, 5, 17, 22) bleibt; und
einen Klemmmechanismus (27, 28, 22), der gezielt eine Klemmkraft auf die Greifelemente (4, 5, 17, 22) aufbringt, sodass, wenn die Klemmanordnung (27, 28, 22) betätigt wird, das erste und zweite Greifelement (4, 5, 17, 22) zusammengeklemmt werden.

2. Anordnung (1) nach Anspruch 1, ferner umfassend eine Buchsenbaugruppe (9), an der eine Lenkradsäule angebracht werden kann.

3. Anordnung (1) nach Anspruch 2, wobei die Buchsenbaugruppe (9) gezielt von dem Einstellelement (10) entkoppelt werden kann, sodass die Buchsenbaugruppe (9) bezogen auf das Gehäuse (2) unabhängig von dem Einstellelement (10) gedreht werden kann.

4. Anordnung (1) nach Anspruch 3, wobei ein Sperrmechanismus (31) vorgesehen ist, um die gezielte Entkopplung der Buchsenbaugruppe (9) von dem Einstellelement (10) zu ermöglichen.

5. Anordnung (1) nach Anspruch 4, wobei ein Vorspannmechanismus vorgesehen ist, um den Sperrmechanismus (31) in die festgestellte Position vorzuspannen, sodass die Buchsenbaugruppe (9) und das Einstellelement (10) miteinander drehverbunden sind.

6. Anordnung (1) nach einem vorhergehenden Anspruch, wobei sich das Einstellelement (10) bezogen auf das Gehäuse (2) drehen kann, um zu ermöglichen, dass sich das zweite Ende (12) des Einstellelements (10) entlang dem Verstellweg bewegt.

7. Anordnung (1) nach Anspruch 6, wobei das Einstellelement mit dem Gehäuse (2) oder einem Element (37), das mit dem Gehäuse (2) verbunden ist, an der Begrenzung von einem oder beiden Enden des Verstellwegs in Berührung kommt.

8. Anordnung (1) nach einem vorhergehenden Anspruch, wobei eine Vielzahl von Einstellelementen (10) vorgesehen ist.

9. Anordnung (1) nach Anspruch 8, wobei jedes der Einstellelemente (10) zwischen einem jeweiligen ersten und zweiten Greifelement (4, 5, 17, 22) angeordnet ist, wobei keine anderen der Einstellelemente (10) zwischen denselben zwei Greifelementen (4, 5, 17, 22) platziert sind.

10. Anordnung (1) nach Anspruch 9, wobei das Einstellelement (10) und mindestens eins der Greifelemente (4, 5, 17, 22) einen Überlappungsbereich aufweisen, und wobei der Klemmmechanismus (27, 28, 22) gezielt eine Klemmkraft auf den Überlappungsbereich zwischen dem Einstellelement (10) und dem Greifelement (4, 5, 17, 22) aufbringt.

11. Anordnung (1) nach Anspruch 9 oder 10, wobei ein Teil des Klemmmechanismus (22), oder ein Teil des Gehäuses (2), eins der Greifelemente umfasst.

12. Anordnung (1) nach einem der Ansprüche 9 bis 11, die mindestens ein an dem Gehäuse (2) angebrachtes Reibelement (17) umfasst, das eins der Greifelemente umfasst.

13. Anordnung (1) nach Anspruch 12, wobei ein Paar Reibelemente (17) vorgesehen ist, wobei das Einstellelement (10) zwischen den Reibelementen (17) angeordnet ist.

14. Anordnung (1) nach Anspruch 13, wobei eine Vielzahl von Einstellelementen (10) und eine Vielzahl von Reibelementen (17) vorgesehen sind, wobei die Einstellelemente (10) und Reibelemente (17) miteinander verschachtelt sind.

15. Anordnung (1) nach einem vorhergehenden Anspruch, ferner umfassend einen Feststellmechanismus (39, 40, 37, 48), der, wenn er gelöst ist, den Klemmmechanismus (27, 28, 22) freigibt und auch die Einstellung der Nutzlänge der Lenksäule ermöglicht.

## Revendications

1. Agencement de réglage de colonne de direction (1) comprenant :
un boîtier (2) ;
un élément de réglage (10) auquel une colonne de direction peut être raccordée de sorte que la colonne de direction pivote avec l'élément de réglage (10), l'élément de réglage (10) présentant une première et une seconde extrémités (12), l'élément de réglage (10) étant oblong et s'amincissant en une pointe (12) à la seconde extrémité (12), plus étroit que le boîtier et situé dans le boîtier (2) et étant relié de manière pivotante au boîtier (2) à ou près de la première extrémité ; et
des premier et second éléments de préhension (4, 5, 17, 22) entre lesquels la seconde extrémité (12) de l'élément de réglage (10) est reçue, les premier et second éléments de préhension (4, 5, 17, 22) définissant un trajet de déplacement entre eux le long duquel la pointe (12) de l'élément de réglage (10) peut se déplacer tout en restant essentiellement entre les éléments de préhension (4, 5, 17, 22) ; et
un mécanisme de serrage (27, 28, 22) qui applique de manière sélective une force de serrage sur les éléments de préhension (4, 5, 17, 22) de sorte que, quand l'agencement de serrage (27, 28, 22) est activé, les premier et second éléments de préhension (4, 5, 17, 22) sont serrés ensemble.

2. Agencement (1) selon la revendication 1, comprenant en outre un ensemble de douille (9) auquel une colonne de direction peut être reliée.

3. Agencement (1) selon la revendication 2, dans lequel l'ensemble de douille (9) peut être découplé de l'élément de réglage (10) de manière sélective, de sorte que l'ensemble de douille (9) peut être pivoté par rapport au boîtier (2) indépendamment de l'élément de réglage (10).

4. Agencement (1) selon la revendication 3, dans lequel un mécanisme d'arrêt (31) est prévu pour permettre le découplage sélectif de l'ensemble de douille (9) et de l'élément de réglage (10).

5. Agencement (1) selon la revendication 4, dans lequel un mécanisme de précontrainte est prévu pour précontraindre le mécanisme d'arrêt (31) dans la position verrouillée, de sorte que l'ensemble de douille (9) et l'élément de réglage (10) sont en liaison rotative l'un avec l'autre.

6. Agencement (1) selon une quelconque revendication précédente, dans lequel l'élément de réglage (10) peut pivoter par rapport au boîtier (2) pour permettre à la seconde extrémité (12) de l'élément de réglage (10) de se déplacer le long du trajet de déplacement.

7. Agencement (1) selon la revendication 6, dans lequel l'élément de réglage vient en contact avec le boîtier (2), ou un élément (37) raccordé au boîtier (2), à la limite de l'une ou des deux extrémités du trajet de déplacement.

8. Agencement (1) selon une quelconque revendication précédente, dans lequel une pluralité d'éléments de réglage (10) est prévue.

9. Agencement (1) selon la revendication 8, dans lequel chacun des éléments de réglage (10) est disposé entre des premier et second éléments de préhension (4, 5, 17, 22) respectifs, aucun autre des éléments de réglage (10) n'étant positionné entre les mêmes deux éléments de préhension (4, 5, 17, 22).

10. Agencement (1) selon la revendication 9, dans lequel l'élément de réglage (10) et au moins l'un des éléments de préhension (4, 5, 17, 22) présentent une zone de chevauchement, et dans lequel le mécanisme de serrage (27, 28, 22) applique de manière sélective une force de serrage sur la zone de chevauchement entre l'élément de réglage (10) et l'élément de préhension (4, 5, 17, 22).

11. Agencement (1) selon la revendication 9 ou 10, dans lequel une partie du mécanisme de serrage (22), ou une partie du boîtier (2), comprend l'un des éléments de préhension.

12. Agencement (1) selon l'une quelconque des revendications 9 à 11, comprenant au moins un élément de frottement (17), relié au boîtier (2), qui comprend l'un des éléments de préhension.

13. Agencement (1) selon la revendication 12, dans lequel une paire d'éléments de frottement (17) est prévue, l'élément de réglage (10) étant disposé entre les éléments de frottement (17).

14. Agencement (1) selon la revendication 13, dans lequel une pluralité d'éléments de réglage (10) et une pluralité d'éléments de frottement (17) sont prévues, les éléments de réglage (10) et les éléments de frottement (17) étant intercalés les uns dans les autres.

15. Agencement (1) selon une quelconque revendication précédente, comprenant en outre un mécanisme de verrouillage (39, 40, 37, 48) qui, quand il est déverrouillé, libère le mécanisme de serrage (27, 28, 22) et permet également que la longueur effective de la colonne de direction soit réglée.
